## Europäisches Patentamt

## European Patent Office

## Office européen des brevets

(11) Veröffentlichungsnummer: **0 118 577**
**B1**

# EUROPÄISCHE PATENTSCHRIFT

(45) Veröffentlichungstag der Patentschrift:
04.11.87

(21) Anmeldenummer: 83102487.2

(22) Anmeldetag: 14.03.83

(51) Int. Cl.⁴: **G 02 B  6/34,** G 02 B  6/12

(54) Wellenlängen-Multiplexer oder -Demultiplexer in integrierter Optik.

(43) Veröffentlichungstag der Anmeldung:
19.09.84 Patentblatt 84/38

(45) Bekanntmachung des Hinweises auf die Patenterteilung:
04.11.87 Patentblatt 87/45

(84) Benannte Vertragsstaaten:
BE DE FR GB IT NL

(56) Entgegenhaltungen:
US-A-3 589 794
US-A-3 753 157
US-A-3 957 341

PATENTS ABSTRACTS OF JAPAN, Band 3, Nr.
106(E-135), 7. September 1979, Seite 6E135
IEEE JOURNAL OF QUANTUM ELECTRONICS,
Band QE-17, Nr. 6, Juni 1981, Seiten 982-987, New
York, USA; Y.MURAKAMI et al.: "Optical
directional coupler using deposited silica
waveguides (DS guides)

(73) Patentinhaber: ANT Nachrichtentechnik GmbH,
Gerberstrasse 33, D-7150 Backnang (DE)

(72) Erfinder: Unger, Hans- Georg, Prof. Dr.- Ing.,
Wöhler Strasse 10, D-3300 Braunschweig (DE)

EP 0 118 577 B1

**Beschreibung**

Die Erfindung befaßt sich mit einem Wellenlängen-Multiplexer oder -Demultiplexer, bestehend aus je einem 3-dB-Richtungskoppler eingangs- und ausgangsseitig, die über zwei optische, planare Wellenleiter, die sich auf oder mindestens teilweise in einem Substrat befinden, miteinander verbunden sind, wobei die eingespeisten Wellen am Ende des Kopplers gleiche Amplituden und vorbestimmte Phasenlagen zueinander haben.

Um zur Steigerung der Übertragungskapazität von einwelligen Fasern zwei oder mehr optische Signalträger im Wellenlängenmultiplex gleichzeitig übertragen zu können, braucht man am Fasereingang einen Wellenlängen-Multiplexer, der die optischen Signalträger verschiedener Wellenlänge von den einzelnen Senderausgängen in die Faser einkoppelt, und am Faserende einen Wellenlängen-Demultiplexer, der die optischen Signalträger nach Auskopplung aus der Faser voneinander trennt und sie den einzelnen optischen Empfängern zuführt. (Unter einwelliger Faser wird hierbei eine Faser verstanden, die möglichst nur einen Wellentyp überträgt (Monomode-Betrieb)).

Wellenlängen-Multiplexer in integrierter optischer Technik sind an sich bekannt, beispielsweise durch die US-PS-3 957 341, bei der zwei dielektrische Wellenleiter so miteinander verkoppelt werden, daß ein frequenzselektives Auskoppeln der eingespeisten Wellen möglich ist. Die beiden Wellenleiter sind dabei als in ein Substrat eingelassene Streifenleiter ausgebildet.

In der US-PS-3 589 794 ist ebenfalls bereits ein Multiplexer beschrieben, der in integrierter Optik aufgebaut ist und aus zwei über geeignet dimensionierte Wellenleiter miteinander verbundenen 3-dB-Richtkopplern besteht (vgl. Spalte 8, Zeilen 46-70). Dabei sind die Wellenleiter als auf oder in einem Substrat angeordnete Streifenleiter ausgebildet, die über eine bestimmte Koppellänge parallel zueinander verlaufen (Fig. 21).

Ziel vorliegender Erfindung ist es, einen Wellenlängen-Multiplexer oder -Demultiplexer aufzuzeigen, welcher einfach in integrierter Optik herstellbar ist, bei einwelligen Fasersystemen verwendet werden kann und in einfacher Weise an große Kanalzahlen anzupassen ist.

Gelöst wird dies durch die im Hauptanspruch angegebenen Merkmale.

Vorteilhafte Ausgestaltungen können gemäß den in den Unteransprüchen angeführten Merkmalen realisiert werden.

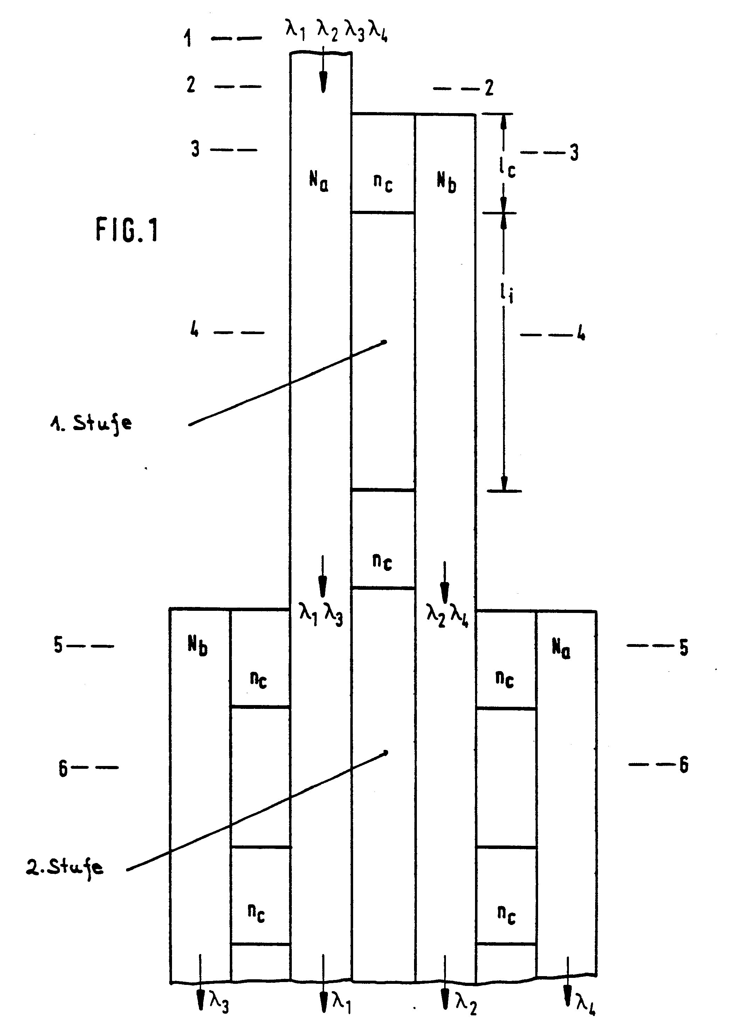

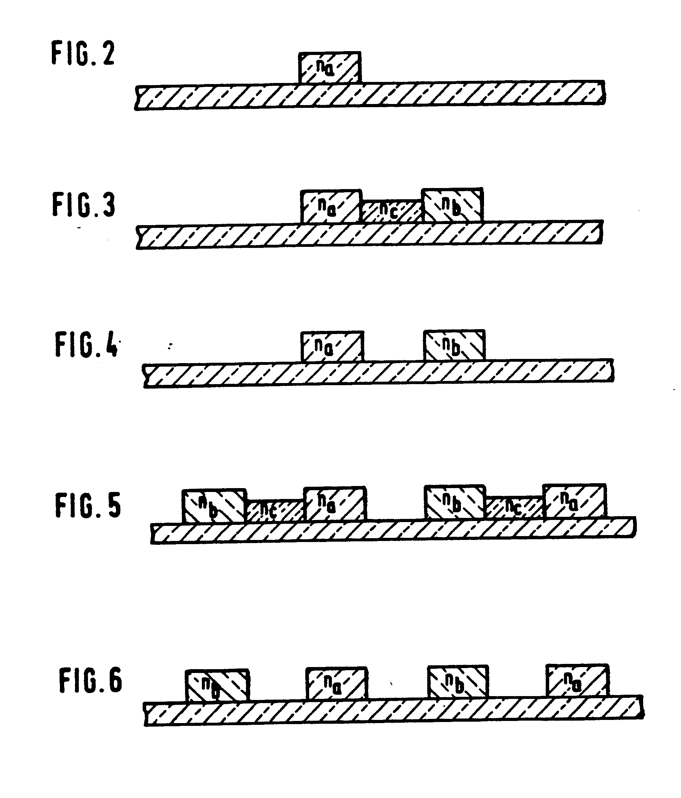

Im folgenden soll die Erfindung näher erläutert werden anhand eines Ausführungsbeispieles in Verbindung mit den Figuren. Dazu wird der Betrieb als Demultiplexer gewählt, wobei ein Multiplexerbetrieb aufgrund der Reziprozität in umgekehrter Richtung entsprechend möglich ist. Das Ausführungsbeispiel trennt außerdem nur vier optische Träger verschiedener Wellenlängen. Fig. 1 zeigt den Demultiplexer, gebildet aus optischen Wellenleitern in Form von Streifenleitern und die ebenfalls in Streifenleiter-Bauweise realisierten Koppler in Draufsicht. Querschnitte zeigen die Figuren 2, 3, 4, 5 und 6. Alle vier optischen Signale mit den Wellenlängen $\lambda_1 < \lambda_2 < \lambda_3 < \lambda_4$ werden zusammen in den Eingang 1 eingespeist. Diese unterschiedlichen Wellenlängen liegen innerhalb des Durchlaßbereiches des eingangsseitigen Wellenleiters. Dessen Bandbreite ist in bekannter Weise von der Art des Wellenleiters und dessen Dimensionierung abhängig. Die Fig. 2 zeigt den Querschnitt 2-2 des Eingangs-Streifenleiters A. Seine Brechzahl ist mit $n_a$ bezeichnet. Die effektive Brechzahl der die optischen Signale führenden Grundwelle in diesem Streifenleiter A sei $N_a$, so daß sie sich je nach ihrer Wellenlänge $\lambda$ mit der Phasenkonstanten $\beta = 2\pi N_A/\lambda$ in ihm ausbreiten. Parallel zu diesem Streifenleiter A liegt ein zweiter Streifenleiter B auf dem Substrat auf, der eine etwas kleinere Brechzahl $n_b$ als der Eingangs-Streifenleiter A und darum für seine Grundwelle auch die etwas kleinere effektive Brechzahl $N_b < N_a$ hat. Über die Länge $l_c$ ist dieser zweite Streifenleiter B mit dem ersten Streifenleiter A dadurch verkoppelt, daß der Zwischenraum mit einem Stoff der Brechzahl $n_c < N_b$ ausgefüllt ist und zwar so, wie es der Querschnitt 3-3 in Fig. 3 zeigt. Die Felder der Grundwelle werden wegen $n_c > 1$ im gefüllten Spalt zwischen den Streifen weniger quergedämpft als im leeren Spalt, so daß sich die Grundwellen beider Streifenleiter hier verkoppeln. Abweichend hiervon können die Streifenleiter über die Koppellänge $l_c$ auch so dicht nebeneinander angeordnet werden, daß dadurch die Verkopplung erfolgt. Der Koppelkoeffizient K, mit dem entsprechend

$$dl_b = Kl_a dl_c \qquad (1)$$

die Grundwelle der Amplitude $l_a$ im Eingangs-Streifenleiter auf einem kurzen Teilstück $dl_c$ die Grundwelle im anderen Streifenleiter mit der Amplitude $dl_b$ anregt, und die Länge $l_c$ des Kopplers müssen so groß gewählt werden, daß am Ende des Kopplers beide Wellen die gleichen Amplituden

$$la = lb \qquad (2)$$

haben. Um diese Bedingung für alle zu trennenden Wellen im Wellenlängenbereich zwischen $\lambda$ min $= \lambda_1$ und $\lambda$ max $= \lambda_4$ möglichst gut zu erfüllen, wählt man den

Koppelkoeffizient $\qquad$ $K = \frac{\pi(N_a - N_b)}{\sqrt{\lambda_{min}\,\lambda_{max}}}$ $\qquad$ (3)

und die Koppelzone $\qquad$ $l_c = \frac{\sqrt{\lambda_{min}\,\lambda_{max}}}{\sqrt{8}\,(N_a-N_b)}$ $\qquad$ (4)

Unter diesen Bedingungen hat nämlich bei konstanter Eingangsleistung die übergekoppelte Leistung $P_b$ in Abhängigkeit von $l_c$ ein Maximum und auch die Bedingung (2) wird gerade erfüllt

Nach einer Strecke der Länge $l_i$, auf der die beiden Streifenleiter den Querschnitt 4-4 haben, wie ihn Fig. 4 zeigt, auf der sie also ohne Verkopplung ihrer Grundwellen parallel laufen, folgt ein zweiter Streifenleiter-Koppler von der gleichen Art wie der erste mit dem Querschnitt 3-3 und der gleichen Länge $l_c$ der Koppelzone.

Am Ausgang des ersten Streifenleiter-Kopplers haben die Grundwellen in beiden Streifen zwar die gleichen Amplituden, sind aber um 90° gegeneinander in der Phase verschoben. Längs der unverkoppelten Strecke der Länge $l_i$ verschieben sie sich weiter gegeneinander in der Phase und zwar beträgt diese zusätzliche Phasendifferenz

$$\Phi_i = 2\pi(N_a-N_b)\frac{l_i}{\lambda}\,, \qquad (5)$$

hängt also auch von der Wellenlänge ab. Für die längste Welle mit $\lambda_{max}$ ist sie am kleinsten und nimmt umgekehrt proportional zur Wellenlänge zu, wobei eine geringfügige Änderung der Differenz der effektiven Brechzahlen mit der Wellenlänge hier unberücksichtigt bleibt. Im Ganzen ändert sich $\Phi_i$ zwischen $\lambda_{min}$ und $\lambda_{max}$ um

$$\Delta\,\Phi_i = 2\pi(N_a-N_b)\left(\tfrac{1}{\lambda_{min}} - \tfrac{1}{\lambda_{max}}\right)l_i. \qquad (6)$$

Die unverkoppelte Länge $l_i$ wird nun beispielsweise so eingestellt, daß bei $\lambda = \lambda_1 = \lambda_{min}$ die Grundwellen beider Streifenleiter A und B am Eingang des zweiten Kopplers gerade die gleiche Phasenverschiebung gegeneinander haben wie am Ausgang des ersten Kopplers. Aufgrund der Reziprozität der Koppler interferieren beide Wellen nach ihrer Wechselwirkung im zweiten Koppler an seinem Ausgang so miteinander, daß sie sich im zweiten Streifenleiter gerade auslöschen, die ganze Eingangsleistung also hier im Eingangs-Streifenleiter erscheint. Wenn außerdem

$$2\pi(N_a-N_b)\left(\tfrac{1}{\lambda_1} - \tfrac{1}{\lambda_2}\right)l_i = \pi \qquad (7)$$

ist, kehrt sich die Phasenverschiebung zwischen den Grundwellen beider Streifenleiter am Eingang des zweiten Streifenleiters gerade von 90° auf minus 90° um, so daß sich beide Grundwellen jetzt am Ausgang des zweiten Kopplers im Eingangs-Streifenleiter A gegenseitig auslöschen und die ganze Leistung bei $\lambda_2$ im zweiten Streifenleiter β erscheint.

Mit

$$2\pi(N_a - N_b)\left(\tfrac{1}{\lambda_{min}} - \tfrac{1}{\lambda_{max}}\right)l_i = 3\pi \qquad (8)$$

werden in der bis jetzt nur betrachteten ersten Stufe des Demultiplexers gerade solche Verhältnisse eingestellt, daß er vier Kanäle mit den verschiedenen Wellenlängen $\lambda_1 = \lambda_{min}$, $\lambda_2$, $\lambda_3$ und $\lambda_4 = \lambda_{max}$ voneinander trennen kann. Soll er n Kanäle mit Wellenlängen zwischen $\lambda_{min}$ und $\lambda_{max}$ voneinander trennen, so muß auf der rechten Seite von Gl. (8) der Faktor 3 durch den Faktor (n-1) ersetzt werden, die unverkoppelte Strecke also

$$l_i = \frac{(n-1)\,(\lambda_{max}\cdot\lambda_{min})}{2(N_a-N_b)\,(\lambda_{max}-\lambda_{min})} \qquad (9)$$

lang sein. Die Kopplerlängen stehen dann in dem Verhältnis

$$\frac{l_c}{l_i} = \frac{\lambda_{max}-\lambda_{min}}{(n-1)\sqrt{2\lambda_{max}\,\lambda_{min}}} \qquad (10)$$

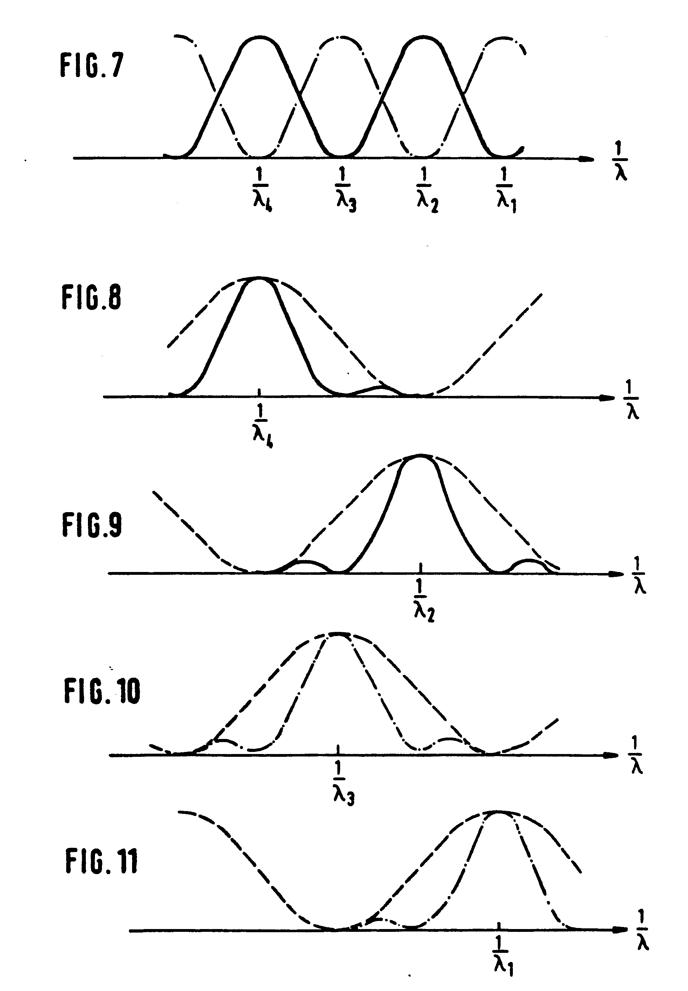

Die Leistungsübertragung vom Eingang zu jedem der Ausgänge des zweiten Streifenleitungskopplers der ersten Stufe hängt sinusförmig von $1/\lambda$ ab, so wie es Fig. 7 zeigt. Bei den Wellenlängen $\lambda_1 = \lambda_{min}$ und $\lambda_3$ wird die Eingangsleistung vollständig zu dem einen Kopplerausgang übertragen und bei den Wellenlängen $\lambda_2$ und $\lambda_4 = \lambda_{max}$ vollständig zu dem anderen Ausgang des zweiten Kopplers.

Diese beiden Ausgänge speisen nun die zweite Stufe des Demultiplexers in Fig. 1, und zwar ist jede Hälfte links bzw. rechts in der Fig. 1 dieser zweiten Stufe genau so aufgebaut wie die erste Stufe des Demultiplexers, nur die unverkoppelten Strecken der Streifenleiter zwischen den ersten und zweiten Kopplern dieser zweiten Stufe sind kürzer als in der ersten Stufe.

In dem betrachteten Beispiel der Fig. 1 wird für die Trennung der Wellenlängen $\lambda_1$ und $\lambda_3$ welche nur in die linke Hälfte der zweiten Stufe gelangen, der Abstand zwischen beiden Kopplern dieser Stufe so groß gewählt,

3

daß für $\lambda = \lambda_1$ die Grundwellen an den beiden Eingängen des zweiten Kopplers dieser linken Stufenhälfte gerade um 90° in der Phase gegeneinander verschoben sind und sich bei $\lambda = \lambda_3$ diese Phasenverschiebung gerade umgekehrt hat, also -90° beträgt. Unter diesen Umständen erscheint dann die ganze Eingangsleistung des Demultiplexers bei $\lambda = \lambda_1$ an dem einen Ausgang des zweiten Kopplers dieser linken Stufenhälfte und bei $\lambda = \lambda_3$ an dem anderen Ausgang. Die andere rechte Hälfte der zweiten Stufe wird für die Wellenlängen $\lambda_2$ und $\lambda_4$, bei denen ja jeweils die ganze Leistung in den Demultiplexer ihren Eingang speist, ganz entsprechend bemessen, wie die erste Hälfte für $\lambda_1$ und $\lambda_3$. Dann wird bei $\lambda = \lambda_2$ die ganze Eingangsleistung des Demultiplexers zu einem Ausgang des zweiten Kopplers dieser rechten Stufenhälfte übertragen und bei $\lambda = \lambda_4$ zu dem anderen Ausgang. Im übrigen hängt die Leistungsübertragung von den Eingängen der ersten Koppler dieser zweiten Stufe zu den Ausgängen der zweiten Koppler wieder sinusförmig von $1/\lambda$ ab, wobei aber die Sinuskurven in Abhängigkeit von $1/\lambda$ gegenüber den Sinuskurven der ersten Stufe die doppelte Periodenlänge haben, so wie es die Fig. 8, 9, 10 und 11 an Hand der gestrichelten Linien zeigen. Im einzelnen zeigen diese Fig. 8, 9, 10 und 11, wie sich die sinusförmigen Übertragungscharakteristiken der ersten Stufe mit den in den Figuren gestrichelt gezeichneten und zu den Übertragungscharakteristiken der ersten Stufe in der Periodenlänge kommensurablen Übertragungscharakteristiken der zweiten Stufe zu Gesamtübertragungs-Charakteristiken multiplizieren, welche für jede der Wellenlängen $\lambda_1$, $\lambda_2$, $\lambda_3$ und $\lambda_4$ die Eingangsleistung ganz auf jeweils einen der vier Ausgänge des Demultiplexers übertragen. Das eine absolute Maximum jeder dieser Übertragungscharakteristiken ist dabei so breit, daß auch für Wellenlängen, die etwas von einem dieser vier Werte abweichen, die Eingangsleistung noch nahezu ganz auf den entsprechenden Ausgang übertragen wird. Außerhalb dieser Durchlaß-Bandbreite werden die entsprechenden Wellenlängen gemäß der jeweiligen Übertragungscharakteristik nahezu unterdrückt.

**Patentansprüche**

1. Wellenlängen-Multiplexer oder -Demultiplexer, bestehend aus je einem 3-dB-Richtungskoppler eingangs- und ausgangsseitig, die über zwei optische, planare Wellenleiter, die sich auf oder mindestens teilweise in einem Substrat befinden, miteinander verbunden sind, wobei die eingespeisten Wellen am Ende des Kopplers gleiche Amplituden und vorbestimmte Phasenlagen zueinander haben, <u>dadurch gekennzeichnet</u>, daß für die Anwendung bei einwelligen Fasersystemen m solcher Stufen mit durchgehend parallel verlaufenden Wellenleitern in Kaskade geschaltet sind und daß die folgenden Bedingungen in den Stufen gelten:

Koppelkoeffizient $\qquad K = \frac{\pi(N_a - N_b)}{\sqrt{\lambda_{min}\,\lambda_{max}}}$

Länge der Koppelzone $\qquad l_c = \frac{\sqrt{\lambda_{min}\,\lambda_{max}}}{\sqrt{8}\,(N_a - N_b)}$

Länge der unverkoppelten
Wellenleiterstrecke $\qquad l_i = \frac{(n-1)\,(\lambda_{max}\,\lambda_{min})}{2(N_a - N_b)\,(\lambda_{max} - \lambda_{min})}$

$\qquad\qquad\qquad\qquad l_i = \frac{\lambda_{max} - \lambda_{min}}{(n-1)\,\sqrt{2}\,\lambda_{max}\,\lambda_{min}}$

mit
$N_a$ effektive Brechzahl des einen Eingangs-Wellenleiters der Anordnung,
$N_b$ effektive Brechzahl des anderen Wellenleiters der Anordnung,
$\lambda_{min}$ niedrigste zu trennende Wellenlänge,
$\lambda_{max}$ höchste zu trennende Wellenlänge,
m Anzahl der Stufen,
n Anzahl der zu trennenden Kanäle.

2. Wellenlängen-Multiplexer oder -Demultiplexer nach Anspruch 1, <u>dadurch gekennzeichnet</u>, daß an mindestens einem Ausgangsarm der ersten Stufe eine weitere gleich aufgebaute Stufe angeschlossen ist.

3. Wellenlängen-Multiplexer oder -Demultiplexer nach Anspruch 2, <u>dadurch gekennzeichnet</u>, daß an den Ausgangsarm der zweiten Stufe weitere Stufen angeschlossen sind.

4. Wellenlängen-Multiplexer oder -Demultiplexer nach einem der vorhergehenden Ansprüche, <u>dadurch gekennzeichnet</u>, daß die Streifenleiter der Koppler zur Verkopplung mit den Wellenleitern über die Koppellänge dicht nebeneinander verlaufen.

5. Wellenlängen-Multiplexer oder -Demultiplexer nach einem der vorhergehenden Ansprüche, <u>dadurch gekennzeichnet</u>, daß die Verkopplung zwischen Koppler und Wellenleiter durch Zwischenfügung eines Materials erfolgt, das eine Brechzahl hat, die kleiner ist als die kleinere Brechzahl der beiden Wellenleiter.

**0 118 577**

## Claims

1. Wavelength multiplexer or demultiplexer, comprising a 3-dB directional coupler at the input and at the output, said 3-dB directional couplers being connected together by means of two planar optical waveguides disposed on or at least partially in a substrate, with the fed-in modes having the same amplitudes and predetermined mutual phase positions at the end of the respective couplers, <u>characterized in that</u>, for use in monomode fiber systems, m such stages are connected in cascade with continuously parallel waveguides and the following conditions apply in said stages:

Coupling coefficient $\qquad K = \frac{\pi(N_a - N_b)}{\sqrt{\lambda_{min}\, \lambda_{max}}}$

length of the coupling zone $\qquad l_c = \frac{\sqrt{\lambda_{min}\, \lambda_{max}}}{\sqrt{8}\,(N_a - N_b)}$

length of the uncoupled waveguide path $\qquad l_i = \frac{(n-1)\,(\lambda_{max}\, \lambda_{min})}{2(N_a - N_b)\,(\lambda_{max} - \lambda_{min})}$

$$l_i = \frac{\lambda_{max} - \lambda_{min}}{(n-1)\,\sqrt{2}\,\lambda_{max}\, \lambda_{min}}$$

where

$N_a$ is the effective refractive index of the one input waveguide of the arrangement;

$N_b$ is the effective refractive index of the other waveguide of the arrangement;

$\lambda_{min}$ is the lowest wavelength to be separated;

$\lambda_{max}$ is the highest wavelength to be separated;

m is the number of stages;

n is the number of channels to be separated.

2. Wavelength multiplexer or demultiplexer according to claim 1, <u>characterized in that</u> a further, identically configured stage is connected to at least one output arm of the first stage.

3. Wavelength multiplexer or demultiplexer according to claim 2, <u>characterized in that</u> further stages are connected to the output arm of the second stage.

4. Wavelength multiplexer or demultiplexer according to one of the preceding claims, <u>characterized in that</u>, for coupling to the waveguides, the striplines of the couplers are in close juxtaposition to one another over the coupling length.

5. Wavelength multiplexer or demultiplexer according to one of the preceding claims, <u>characterized in that</u> the coupling between couplers and waveguides is effected through the intermediary of a material which has an index of refraction lower than the lower index of refraction of the two waveguides.

## Revendications

1. Multiplexeur ou démultiplexeur en longueurs d'onde, constitué par un coupleur directionnel 3 dB d'entrée et un coupleur directionnel 3 dB de sortie, reliés par deux guides optiques planar situés totalement ou partiellement au moins dans un substrat, les ondes injectées présentant les mêmes amplitudes et des phases relatives prédéterminées à l'extrémité du coupleur, ledit multiplexeur ou démultiplexeur étant caractérisé en ce que, pour l'application à des systèmes à fibres monomodes, m étages de ce type à guides d'onde en parallèle sont couplés en cascade; et les conditions suivantes sont valides dans les étages:

coefficient de couplage $\qquad K = \frac{\pi(N_a - N_b)}{\sqrt{\lambda_{min}\,max}}$

longueur de la zone de couplage $\qquad l_c = \frac{\sqrt{\lambda_{min}\,max}}{\sqrt{8}\,(N_a - N_b)}$

longueur du tronçon de guide d'onde non couplé $\qquad l_i = \frac{(n-1)\,(\lambda_{max}\,\lambda_{min})}{2(N_a - N_b)\,(\lambda_{max} - \lambda_{min})}$

$$l_i = \frac{\lambda_{max} - \lambda_{min}}{(n-1)\,\sqrt{2}\,\lambda_{max}\, \lambda_{min}}$$

avec:

$N_a$ indice de réfraction effectif d'un guide d'onde d'entrée du dispositif

$N_b$ indice de réfraction effectif du second guide d'onde du dispositif

$\lambda_{min}$ plus courte longueur d'onde à séparer

$\lambda_{max}$ plus grande longueur d'onde à séparer

m nombre d'étages

n nombre de voies à séparer.

2. Multiplexeur ou démultiplexeur en longueurs d'onde selon revendication 1, caractérisé par le

5

raccordement d'un autre étage de constitution identique à un bras de sortie au moins du premier étage.

3. Multiplexeur ou démultiplexeur en longueurs d'onde selon revendication 2, caractérisé par le raccordement d'autres étages au bras de sortie du deuxième étage.

4. Mutliplexeur ou démultiplexeur en longueurs d'onde selon une quelconque des revendications 1 à 3, caractérisé en ce que pour le couplage avec les guides d'onde, les rubans découpleurs sont juxtaposés sur la longueur de couplage.

5. Multiplexeur ou démultiplexeur en longueurs d'onde selon une quelconque des revendications 1 à 4, caractérisé en ce que le couplage entre coupleur et guide d'onde s'effectue par insertion d'un matériau d'indice de réfraction inférieur au plus faible indice de réfraction des deux guides d'onde.

FIG.1

$\lambda_1$ $\lambda_2$ $\lambda_3$ $\lambda_4$

$N_a$   $n_c$   $N_b$

$l_c$

$l_i$

1. Stufe

$n_c$

$\lambda_1$ $\lambda_3$   $\lambda_2$ $\lambda_4$

$N_b$   $n_c$   $N_a$

2. Stufe

$n_c$   $n_c$

$\lambda_3$   $\lambda_1$   $\lambda_2$   $\lambda_4$

1

FIG.2

FIG.3

FIG.4

FIG.5

FIG.6

FIG.7

FIG.8

FIG.9

FIG.10

FIG.11